# EUROPÄISCHE PATENTANMELDUNG

(11) **EP 4 825 517 A1**
(43) Veröffentlichungstag der Anmeldung: **21.10.2026**
(21) Anmeldenummer: 25171482.0
(22) Anmeldetag: 18.04.2025
(51) Int. Cl.: B23K 9/067, B23K 10/00, H05H 1/36

(54) **VORRICHTUNG UND VERFAHREN ZUM ERZEUGEN EINES ZÜNDIMPULSES FÜR EIN SCHWEISSGERÄT, SCHWEISSVORRICHTUNG**

(71) Anmelder: FRONIUS INTERNATIONAL GmbH, 4643 Pettenbach (AT)
(72) Erfinder: Hillinger, Moritz, 4643 Pettenbach (AT); Prinz, Andreas, 4643 Pettenbach (AT)
(74) Vertreter: Bratovic, Nino Maria

(57) **Zusammenfassung**

Vorrichtung und ein Verfahren zum Erzeugen eines Zündimpulses für ein Schweißgerät. Die Vorrichtung umfasst einen Ausgangsanschluss zur Verbindung mit einem Schlauchpaket des Schweißgeräts, eine Ansteuereinrichtung zur Bereitstellung eines Hochfrequenzsignals an einem Hochfrequenzanschluss, ein induktives Bauelement, das zwischen dem Hochfrequenzanschluss und dem Ausgangsanschluss angeordnet ist, sowie einen ersten Kondensator, der mit mindestens einem Anschlusspunkt des induktiven Bauelements elektrisch gekoppelt ist. Die Ansteuereinrichtung ist dazu ausgelegt, die Frequenz des Hochfrequenzsignals einzustellen, wodurch eine Anpassung an die jeweiligen Resonanzeigenschaften eines Schwingkreises mit dem Schlauchpaket des Schweißgeräts erfolgt. Dadurch wird eine verbesserte, stabile und effiziente Zündung von Lichtbogen und Plasmaschweißgeräten ermöglicht.

## Beschreibung

### Technisches Gebiet

Die vorliegende Erfindung betrifft eine Vorrichtung und ein Verfahren zum Erzeugen eines Zündimpulses für ein Schweißgerät, insbesondere ein Lichtbogen- oder Plasmaschweißgerät. Die vorliegende Erfindung betrifft ferner eine Schweißvorrichtung mit einer solchen Vorrichtung zum Erzeugen eines Zündimpulses.

### Hintergrund

Hochfrequenz-Zündungsvorrichtungen werden in Lichtbogen- und Plasmaschweißgeräten eingesetzt, um den Schweißlichtbogen durch das Zünden eines elektrischen Funkens zwischen Elektrode und Werkstück zu initiieren. Ein etabliertes Verfahren zur Erzeugung eines Hochspannungsimpulses ist die sogenannte Überlagerungszündung. Dabei wird ein impulsfester Kondensator auf eine hohe Spannung vorgeladen und über ein Schaltelement in die Primärwicklung eines Zünd-Transformators entladen. Die dabei entstehende Hochspannung ionisiert das Gas im Bereich der Elektrode und ermöglicht das Zünden des Lichtbogens. Als Schaltelemente kommen üblicherweise eine Funkenstrecke, ein Thyristor oder eine sättigbare Zünddrossel zum Einsatz.

Obwohl die Überlagerungszündung in der Praxis weit verbreitet ist, sind mit dieser Technologie einige technische Einschränkungen verbunden. Eine zentrale Limitierung liegt in der kurzen Einzelpulslänge des Zündimpulses. Die Entladung des Kondensators führt zu einer gedämpften Schwingung, die rasch abklingt und nur für einen kurzen Zeitraum eine hohe Amplitude aufweist. Zudem ist die maximale Pulswiederholrate durch die Wiederaufladung des Kondensators und die Resetschaltung der Schaltelemente in der Regel auf etwa 10 kHz begrenzt. Dies verhindert die Erzeugung einer kontinuierlich schwingenden Hochfrequenz-Wellenform.

Ein weiteres Problem ergibt sich aus der Polarität des Zündimpulses. Da die Überlagerungszündung eine gedämpfte Schwingung erzeugt, tritt der maximale Spitzenwert der Zündspannung stets nur in einer bestimmten Polarität auf. Ist das Schweißpotential beispielsweise negativ, während der Zündimpuls eine positive Polarität aufweist, kann dies dazu führen, dass die ionisierte Zündstrecke nicht aufrechterhalten werden kann, bevor sich ein stabiler Lichtbogen bildet.

Zusätzlich beeinflusst die Kapazität des Schlauchpakets die erreichbare Zündspannung erheblich. Mit zunehmender Länge steigt die kapazitive Last, wodurch ein größerer Anteil der Energie des Zündimpulses für das Umladen dieser Kapazität benötigt wird. Dies hat zur Folge, dass sich die übertragene Energie zur Elektrodenspitze verringert und die Zündperformance mit längeren Schlauchpaketen deutlich abnimmt.

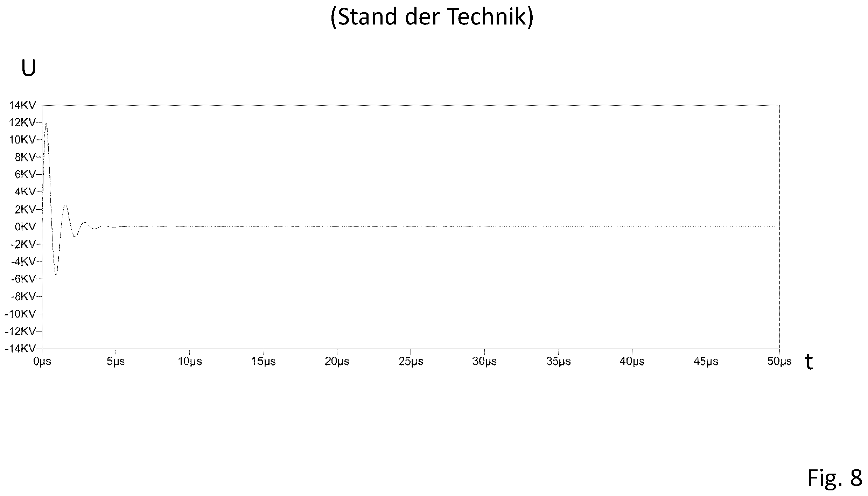

Die Problematik konventioneller Zündverfahren zeigt sich exemplarisch in Figur 8, welche den zeitlichen Verlauf eines typischen Zündimpulses gemäß dem Stand der Technik veranschaulicht. Der dargestellte Impuls beginnt mit einer positiven Spannungsspitze von etwa 12 kV, gefolgt von einem deutlich schwächeren negativen Ausschlag von nur rund -6 kV. Bereits die nächste positive Halbwelle erreicht lediglich eine Amplitude von etwa 2 kV, was rund einem Sechstel des anfänglichen Werts entspricht. Damit steht die maximale Zündspannung praktisch nur in einer Polaritätsrichtung zur Verfügung, während Impulse entgegengesetzter Polarität bereits deutlich abgeschwächt sind. Dieses asymmetrische und rasch abklingende Signalverhalten ist charakteristisch für konventionelle Überlagerungszündungen, bei denen ein vorgeladener Impulskondensator in die Primärwicklung eines Transformators entladen wird. Der rasche Abfall der Amplitude innerhalb weniger Mikrosekunden führt dazu, dass eine wirksame Zündspannung nur für sehr kurze Zeit zur Verfügung steht.

Ausgehend von den genannten Einschränkungen bestehender Hochfrequenz-Zündungsvorrichtungen besteht die Aufgabe der vorliegenden Erfindung darin, eine verbesserte Zündung für Lichtbogen- und Plasmaschweißgeräte bereitzustellen. Insbesondere soll ein Verfahren geschaffen werden, das ein hochfrequentes Signal erzeugt, dessen Amplituden in beiden Polaritätsrichtungen gleichmäßig ausgeprägt sind und das keine signifikante Dämpfung erfährt. Dadurch wird eine zuverlässige Initiierung des Schweißlichtbogens unabhängig vom vorliegenden Schweißpotential ermöglicht, wodurch das Risiko eines vorzeitigen Abrisses des Kanals reduziert wird.

Das vorgeschlagene Verfahren und die zugehörige Vorrichtung sollen eine breite Anwendbarkeit für verschiedene Schweißverfahren ermöglichen, wobei insbesondere WIG-Schweißgeräte von den Vorteilen profitieren. Gleichzeitig soll die Lösung so gestaltet sein, dass sie sich einfach in bestehende Gerätekonzepte integrieren lässt, um eine flexible und praxisnahe Implementierung zu gewährleisten.

### Zusammenfassung der Erfindung

Die vorliegende Erfindung schafft eine Vorrichtung und ein Verfahren zum Erzeugen eines Zündimpulses für ein Schweißgerät sowie eine Schweißvorrichtung mit den Merkmalen der unabhängigen Patentansprüche. Weitere vorteilhafte Ausführungsformen sind Gegenstand der abhängigen Ansprüche.

In einem ersten Aspekt schafft die Erfindung eine Vorrichtung zum Erzeugen eines Zündimpulses für ein Schweißgerät. Die Vorrichtung umfasst einen Ausgangsanschluss mit einem ersten und einem zweiten Anschlusspunkt, die zur Verbindung mit einem Schlauchpaket des Schweißgeräts vorgesehen sind. Eine Ansteuereinrichtung ist so ausgebildet, dass sie an einem Hochfrequenzanschluss ein Hochfrequenzsignal bereitstellt. Zwischen dem Hochfrequenzanschluss und dem Ausgangsanschluss ist ein induktives Bauelement angeordnet. Die Ansteuereinrichtung ist dazu ausgelegt, eine Resonanzfrequenz eines Schwingkreises mit einem an dem Ausgangsanschluss angeschlossen Schlauchpaket (d.h. eines Schwingkreises, welcher ein an dem Ausgangsanschluss angeschlossenes Schlauchpaket ist oder umfasst) zu ermitteln. Ferner ist die Ansteuereinrichtung dazu ausgelegt, die Frequenz des bereitgestellten Hochfrequenzsignals unter Verwendung der ermittelten Resonanzfrequenz einzustellen.

In einem zweiten Aspekt schafft die Erfindung eine Schweißvorrichtung, die eine Schweißstromquelle und eine erfindungsgemäße Vorrichtung zum Erzeugen eines Zündimpulses gemäß dem voraufgegangenen Aspekt umfasst.

Die Schweißvorrichtung kann dabei eine Plasmaschweißvorrichtung oder eine Lichtbogenschweißvorrichtung sein, insbesondere beispielsweise ein Wolfram-Inert-Gas (WIG)-Schweißgerät, ein MIG/MAG-Schweißgerät oder ein Elektrodenschweißgerät.

Gemäß noch einem weiteren Aspekt schafft die Erfindung ein Verfahren zum Erzeugen eines Zündimpulses für ein Schweißgerät. Dabei wird zunächst eine Vorrichtung zum Erzeugen eines Zündimpulses gemäß dem vorhergehenden ersten Aspekt bereitgestellt. Daraufhin wird eine Resonanzfrequenz eines Schwingkreises mit einem an dem Ausgangsanschluss angeschlossenen Schlauchpaket ermittelt. Anschließend wird der Schwingkreis angeregt, indem ein am Ausgangsanschluss der Vorrichtung angeschlossenes Schlauchpaket (als Schwingkreis oder als Teil des Schwingkreises) mit einem Hochfrequenzsignal beaufschlagt wird. Die Frequenz des Hochfrequenzsignals wird unter Verwendung des erfassten Sensorsignals eingestellt.

Die vorliegende Erfindung beruht auf der Erkenntnis, dass die bekannten Hochfrequenz-Zündungsvorrichtungen in Lichtbogen- und Plasmaschweißgeräten durch die begrenzte Dauer und Dämpfung der Zündimpulse in ihrer Zündperformance limitiert sind. Insbesondere führt die kapazitive Belastung des Schlauchpakets zu einem erheblichen Spannungsabfall, wodurch die Zündspannung an der Elektrodenspitze mit zunehmender Schlauchpaketlänge deutlich reduziert wird. Darüber hinaus zeigt sich, dass klassische Überlagerungszündungen eine einseitige Polarität aufweisen, wodurch in bestimmten Schweißanwendungen das Risiko besteht, dass der Kanal vorzeitig abreißt und sich kein stabiler Lichtbogen ausbildet.

Es ist daher eine Idee der vorliegenden Erfindung, dieser Erkenntnis Rechnung zu tragen und eine verbesserte Zündcharakteristik bereitzustellen. Zu diesem Zweck wird eine Hochfrequenz-Zündungsvorrichtung geschaffen, die ein Hochfrequenzsignal bereitstellt, dessen Amplituden in beiden Polaritätsrichtungen gleichmäßig ausgeprägt sind und das während der Zündphase keine signifikante Dämpfung erfährt. Das Hochfrequenzsignal wird in einen Schwingkreis eingespeist, der über das Schlauchpaket mit der Elektrode gekoppelt ist. In einer solchen Konfiguration kann dabei unter Verwendung der parasitären Eigenschaft des Schlauchpakets ein solcher Schwingkreis gebildet werden.

Das Schlauchpaket eines Schweißgeräts dient der Führung verschiedener Leitungen, darunter die Stromleitung zur Elektrode sowie gegebenenfalls weitere Steuerleitungen und, sofern erforderlich, eine Gaszufuhr für das Schutzgas. Insbesondere weist das Schlauchpaket kapazitive und induktive Eigenschaften auf, die sich abhängig von seiner Lage und Position im Raum ändern können. Da diese Parameter das Schwingverhalten eines in die Zündung einbezogenen Schwingkreises bestimmen, kann eine Bewegung des Schlauchpakets zu einer Änderung der Resonanzfrequenz führen. Zusätzlich können auch Stromleitungen anderer elektrischer Komponenten, bspw. Roboterleitungen zu einer Änderung der Resonanzfrequenz führen.

Die Ansteuereinrichtung erzeugt ein Hochfrequenzsignal, das zur Anregung des nachgeschalteten Schwingkreises dient. Dieses Signal kann beispielsweise in Form eines rechteckförmigen Signals bereitgestellt werden, um eine Anregung des Schwingkreises mit der gewünschten Frequenz zu ermöglichen.

Der Schwingkreis umfasst unter anderem das Schlauchpaket sowie weitere elektrische Bauelemente der Vorrichtung. Die kapazitive Eigenschaft des Schlauchpakets trägt wesentlich zum Schwingverhalten bei.

Die Frequenz des Hochfrequenzsignals kann dabei in Bezug auf eine Resonanzfrequenz eines Schwingkreises gewählt werden, der insbesondere das Schlauchpaket umfasst. Die Wahl dieser Frequenz kann so erfolgen, dass sie mit der Resonanzfrequenz des Schwingkreises übereinstimmt oder leicht davon abweicht. Insbesondere kann die Frequenz bis zum 1,5-fachen, 2-fachen, 3-fachen oder 4-fachen der Resonanzfrequenz betragen oder auf ein anderes ganzzahliges Vielfaches der Resonanzfrequenz eingestellt werden. Ebenso ist es möglich, die Frequenz auf einen Bruchteil der Resonanzfrequenz, beispielsweise bis hin zur Hälfte, zu einem Drittel, oder einem Viertel der Resonanzfrequenz, einzustellen. Durch eine geeignete Auswahl der Frequenz lässt sich das Schwingverhalten der angeschlossenen Komponenten gezielt nutzen, um eine wirksame Anregung und damit eine zuverlässige Zündung zu ermöglichen.

Die Resonanzfrequenz des Schwingkreises kann dabei auf unterschiedliche Weise ermittelt oder bereitgestellt werden. So kann sie beispielsweise durch eine messtechnische Auswertung des elektrischen Verhaltens bei der Anregung bestimmt werden. Alternativ oder zusätzlich ist es möglich, charakteristische Eigenschaften des angeschlossenen Schlauchpakets oder des gesamten Schwingkreises bereits im Vorfeld zu ermitteln und zu speichern, sodass die Ansteuereinrichtung auf Basis dieser vorab ermittelten Informationen eine geeignete Frequenz für das Hochfrequenzsignal auswählen kann.

In einer Ausführungsform ist ein erster Kondensator vorgesehen. Dieser erste Kondensator ist mit mindestens einem Anschlusspunkt des induktiven Bauelements elektrisch gekoppelt. Er bildet gemeinsam mit den parasitären Kapazitäten des Schlauchpakets einen Teil des Schwingkreises. Dadurch lassen sich die Resonanzeigenschaften der Vorrichtung gezielt einstellen, insbesondere im Hinblick auf die erreichbare Resonanzfrequenz.

In einer weiteren Ausführungsform umfasst die Vorrichtung eine Messeinrichtung. Diese Messeinrichtung kann beispielsweise zwischen dem Hochfrequenzanschluss der Ansteuereinrichtung und dem Ausgangsanschluss angeordnet sein. Diese Messeinrichtung ist vorteilhaft dazu ausgebildet, den zeitlichen Verlauf zumindest eines elektrischen Parameters, beispielsweise der Spannung oder des Stroms, im Schwingkreis zu erfassen und daraus ein entsprechendes Sensorsignal bereitzustellen. Die Messeinrichtung erfasst dabei elektrische Parameter des Systems und stellt ein Sensorsignal bereit, das von der Ansteuereinrichtung zur adaptiven Anpassung der Frequenz des Hochfrequenzsignals genutzt wird. Dadurch wird sichergestellt, dass die Zündspannung unabhängig von der Länge des Schlauchpakets aufrechterhalten bleibt und eine zuverlässige Lichtbogenzündung ermöglicht wird.

Die Messeinrichtung erfasst einen elektrischen Parameter der Zündvorrichtung, der zur Anpassung des Hochfrequenzsignals genutzt wird. In der Regel kann es sich dabei um eine Strom- oder Spannungsmessung handeln, jedoch sind auch andere physikalische Größen grundsätzlich denkbar.

Die Messeinrichtung kann an verschiedenen Positionen innerhalb der Vorrichtung vorgesehen sein. Eine Möglichkeit besteht darin, sie im Bereich des Ausgangsanschlusses zu platzieren, beispielsweise zwischen dem induktiven Bauelement und einem der Anschlusspunkte des Ausgangsanschlusses. In dieser Anordnung erfolgt die Messung nahe am Schlauchpaket, sodass die erfassten Werte die elektrischen Verhältnisse an der Zündstrecke möglichst genau widerspiegeln. Dadurch kann die Frequenzregelung des Hochfrequenzsignals an die tatsächlichen Bedingungen an der Elektrodenspitze angepasst werden.

Alternativ kann die Messeinrichtung zwischen der Ansteuereinrichtung und dem induktiven Bauelement angeordnet sein. In dieser Position sind typischerweise geringere elektrische Spannungen zu erwarten, was die Anforderungen an die Messelektronik reduzieren kann. Insbesondere könnte in einer solchen Anordnung auf aufwendige Schutzmaßnahmen oder eine galvanische Trennung verzichtet werden.

Das von der Messeinrichtung erfasste Signal wird als Sensorsignal bereitgestellt und in geeigneter Weise der Ansteuereinrichtung zur Weiterverarbeitung zugeführt. Dadurch kann die Frequenz des Hochfrequenzsignals gezielt angepasst werden, um eine zuverlässige und effiziente Zündung zu ermöglichen.

Die Ansteuereinrichtung kann dieses Sensorsignal von der Messeinrichtung auswerten, um daraus die Resonanzfrequenz des Schwingkreises mit dem angeschlossenen Schlauchpaket zu ermitteln. Auf dieser Basis kann dann eine gezielte Frequenzanpassung erfolgen, um das Hochfrequenzsignal optimal an die jeweils vorliegenden Bedingungen anzupassen.

In einer weiteren Ausführungsform ist die Ansteuereinrichtung dazu ausgelegt, die Resonanzfrequenz des Schwingkreises mit einem an dem Ausgangsanschluss angeschlossenen Schlauchpaket unter Verwendung eines zuvor ermittelten charakteristischen Parameters für das Schlauchpaket zu ermitteln. Derartige charakteristische Parameter können beispielsweise im Rahmen einer vorhergehenden Messung bestimmt worden sein, etwa durch Laborvermessung des Schwingkreises mit angeschlossenem Schlauchpaket oder durch isolierte Bestimmung der parasitären Eigenschaften des Schlauchpakets selbst, insbesondere der parasitären Induktivität und Kapazität. Die auf diese Weise ermittelten Parameter können entweder direkt die Resonanzfrequenz des Schwingkreises mit dem Schlauchpaket spezifizieren oder sie ermöglichen eine rechnerische Bestimmung der Resonanzfrequenz, die anschließend zur Einstellung der Frequenz des Hochfrequenzsignals herangezogen wird.

In einer weiteren Ausführungsform umfasst die Vorrichtung eine Speichereinrichtung, die dazu ausgelegt ist, einen Zusammenhang zwischen an den Ausgangsanschluss anschließbaren Schlauchpaketen und mindestens einem zuvor ermittelten charakteristischen Parameter für das jeweilige Schlauchpaket zu speichern und bereitzustellen. Die Auswahl der zu verwendenden Daten aus der Speichereinrichtung kann hierbei auf zwei Wegen erfolgen: So kann einerseits eine automatische Identifikation des jeweils angeschlossenen Schlauchpakets erfolgen, etwa anhand von Länge, Typ oder weiteren Erkennungsmerkmalen. Alternativ kann ein Benutzer ein Schlauchpaket manuell anschließen und anschließend über eine Benutzerschnittstelle entsprechende Informationen eingeben. In beiden Fällen werden die auf das jeweilige Schlauchpaket zutreffenden charakteristischen Daten automatisch aus der Speichereinrichtung ausgelesen und zur Bestimmung der anzulegenden Frequenz des Hochfrequenzsignals verwendet.

In einer weiteren Ausführungsform umfasst die Vorrichtung einen zweiten Kondensator, der zwischen einem Anschlusspunkt des Hochfrequenzanschlusses und dem induktiven Bauelement angeordnet ist. Durch diese Anordnung kann der zweite Kondensator dazu beitragen, Gleichspannungsanteile in der Anregung des Schwingkreises zu blockieren, sodass im Wesentlichen nur die Wechselanteile des Hochfrequenzsignals zur Ansteuerung des Schwingkreises gelangen.

In einer weiteren Ausführungsform umfasst das induktive Bauelement einen Transformator. Die Primärseite des Transformators ist dabei mit dem Hochfrequenzanschluss der Ansteuereinrichtung elektrisch gekoppelt, während die Sekundärseite mit dem Ausgangsanschluss verbunden ist.

Durch diese Anordnung wird eine galvanische Trennung zwischen der Ansteuereinrichtung und dem Schlauchpaket erreicht, was sich vorteilhaft auf die elektrische Isolation der Komponenten auswirken kann. Zudem ermöglicht der Transformator durch die Wahl eines geeigneten Übersetzungsverhältnisses eine Anpassung der Spannung des Hochfrequenzsignals. Beispielsweise kann die Ansteuerschaltung ein Signal mit einer vergleichsweise geringen Spannung erzeugen, das durch den Transformator in eine höhere Spannung umgesetzt wird, um eine effiziente Anregung des Schwingkreises zu gewährleisten.

In einer weiteren Ausführungsform umfasst das induktive Bauelement eine erste Spule, die an einem ersten Anschlusspunkt mit einem ersten Anschlusspunkt des Hochfrequenzanschlusses der Ansteuereinrichtung elektrisch gekoppelt ist und an einem zweiten Anschlusspunkt mit einem zweiten Anschlusspunkt des Ausgangsanschlusses elektrisch gekoppelt ist. Diese Anordnung kann zur Ausbildung eines erfindungsgemäßen Schwingkreises genutzt werden, ohne dass hierfür ein galvanisch trennender Transformator erforderlich ist.

In einer weiteren Ausgestaltung dieser Ausführungsform ist eine zweite Spule vorgesehen, die mit einem ersten Anschlusspunkt mit dem ersten Anschlusspunkt der ersten Spule elektrisch verbunden ist und mit einem zweiten Anschlusspunkt mit einem zweiten Anschlusspunkt des Hochfrequenzanschlusses elektrisch verbunden ist. Somit kann die zweite Spule mit den zweiten Anschlusspunkt, welcher mit dem zweiten Anschlusspunkt des Hochfrequenzanschlusses ist, auch mit dem ersten Anschlusspunkt des Ausgangsanschlusses verbunden sein. Bei dieser zweiten Spule kann es sich insbesondere um eine Luftspule handeln.

In einer weiteren Ausführungsform ist die Ansteuereinrichtung dazu ausgelegt, das Hochfrequenzsignal in Form von Pulsen bereitzustellen. Dabei können die Pulse eine vorbestimmte Pulsdauer und/oder eine definierte Pulsamplitude aufweisen, wodurch sich die Signalcharakteristik gezielt steuern lässt.

In einer weiteren Ausgestaltung dieser Variante kann die Ansteuereinrichtung eine Folge von Pulsen mit vorbestimmten zeitlichen Abständen erzeugen. Eine solche Pulsfolge kann ein über die Ausgabezeit hinweg periodisches Muster bilden, das das zeitliche Verhalten des Hochfrequenzsignals bestimmt. Durch die gezielte Wahl der Pulsabstände lassen sich verschiedene Zündcharakteristiken realisieren, beispielsweise zur Anpassung an unterschiedliche Schweißbedingungen oder zur Beeinflussung der Energieverteilung innerhalb der Zündsequenz.

In einer weiteren Ausführungsform ist die Ansteuereinrichtung dazu ausgelegt, die während eines Pulses abgegebene Zündenergie zu ermitteln und basierend auf dieser Ermittlung die Pulsdauer, die Pulsamplitude und/oder den zeitlichen Abstand zwischen den Pulsen anzupassen.

Durch diese Regelung kann sichergestellt werden, dass die abgegebene Zündenergie innerhalb eines vorgegebenen Zeitintervalls begrenzt bleibt. Dies ermöglicht es, eine hohe Energie gezielt in kurzen Pulsen bereitzustellen, während in den Zwischenphasen keine weitere Energie ausgegeben wird. Auf diese Weise kann der Zündvorgang mit einer hohen Leistungsabgabe realisiert werden, ohne dabei festgelegte Grenzwerte zu überschreiten, was insbesondere für den Personenschutz von Bedeutung sein kann.

In einer weiteren Ausführungsform weist der hochfrequente Anteil der am Ausgangsanschluss bereitgestellten Ausgangsspannung eine zumindest annähernd kontinuierliche sinusförmige Signalform auf oder ist als Puls mit einer zumindest annähernd kontinuierlichen sinusförmigen Signalform ausgestaltet.

Bei einer derartigen Signalform bleibt die Amplitude über die Dauer des Pulses möglichst konstant, ohne dass eine signifikante Dämpfung auftritt. Dies trägt dazu bei, dass die Amplituden in beiden Polaritätsrichtungen annähernd gleich stark sind, sodass keine bestimmte Polarität bevorzugt wird.

In einer weiteren Ausführungsform ist die Ansteuereinrichtung dazu ausgelegt, den Verlauf des hochfrequenten Anteils der am Ausgangsanschluss bereitgestellten Ausgangsspannung zu überwachen. Falls eine Dämpfung dieses hochfrequenten Anteils einen vorbestimmten Schwellwert überschreitet, wird das Bereitstellen des Hochfrequenzsignals beendet.

Durch diese Überwachung kann auf unerwartete Veränderungen der elektrischen Eigenschaften des Schwingkreises reagiert werden. Insbesondere kann eine starke Dämpfung darauf hindeuten, dass der Lastwiderstand an der Sekundärseite erheblich gesunken ist, beispielsweise durch einen ungewollten Kontakt mit einem menschlichen Körper. In einem solchen Fall wird das Hochfrequenzsignal abgeschaltet, um die in den Körper abgegebene Energie auf ein Minimum zu reduzieren, ohne die normale Zündperformance im regulären Betrieb zu beeinträchtigen.

In einer weiteren Ausführungsform weist das Hochfrequenzsignal eine Frequenz von mindestens 10 Kilohertz auf. Bevorzugt liegt die Frequenz in einem Bereich zwischen 300 Kilohertz und 3 Megahertz.

Die Wahl der Frequenz hängt unter anderem von der Resonanzeigenschaft des Schwingkreises ab, die sich aus der Kombination von Schlauchpaket, Zündtransformator und Resonanzkondensator ergibt. In vielen Anwendungen liegt die Resonanzfrequenz typischerweise im Bereich von 300 Kilohertz bis 1,3 Megahertz. Höhere Frequenzen, insbesondere bis in den Bereich mehrerer Megahertz, sind ebenfalls realisierbar und ermöglichen unter bestimmten Voraussetzungen eine kompaktere Bauweise der Schaltungskomponenten.

In einer weiteren Ausführungsform umfasst die Ansteuereinrichtung eine Energieversorgungsschaltung, die dazu ausgelegt ist, eine modulierbare Speisespannung für das Bereitstellen des Hochfrequenzsignals einzustellen.

Durch die Modulation der Speisespannung kann die Amplitude des Hochfrequenzsignals gezielt beeinflusst werden. Insbesondere bei einer Ansteuerschaltung, die mit einer oder mehreren Halbbrücken realisiert ist, kann eine eingangsseitig bereitgestellte Gleichspannung entsprechend der Taktrate des Hochfrequenzsignals in eine Wechselspannung umgewandelt werden. Die Anpassung der Speisespannung ermöglicht es, die Ausgangsamplitude flexibel zu steuern und auf unterschiedliche Betriebsbedingungen anzupassen. Die Modulation der Speisespannung kann beispielsweise in Form eines Rampenverlaufs erfolgen, wodurch eine kontrollierte Änderung der Ausgangsamplitude über die Zeit ermöglicht wird.

Die obigen Ausgestaltungen und Weiterbildungen lassen sich, soweit technisch sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden im Zusammenhang mit den Ausführungsbeispielen beschriebenen Merkmalen. Insbesondere können Merkmale, die im Zusammenhang mit einer Vorrichtung beschrieben wurden, auch in entsprechende Verfahrensaspekte übertragen werden und umgekehrt. Der Fachmann wird darüber hinaus erkennen, dass einzelne Aspekte der Erfindung als Verbesserungen oder Ergänzungen zu den jeweiligen Grundformen der Erfindung genutzt werden können.

### Kurze Beschreibung der Zeichnungen

Weitere Merkmale und Vorteile der Erfindung werden nachfolgend anhand der Figuren erläutert.

Dabei zeigen:
Figur 1 eine schematische Übersichtsdarstellung einer Schweißvorrichtung mit einer Vorrichtung zur Erzeugung eines Zündimpulses,
Figur 2 ein Prinzipschaltbild einer Vorrichtung zur Erzeugung eines Zündimpulses gemäß einer Ausführungsform,
Figur 3 einen beispielhaften Vergleich des Verlaufs der Ausgangsspannung während der Zündung gemäß der vorliegenden Erfindung und während einem konventionellen Zündimpuls,
Figur 4 ein Prinzipschaltbild einer Schweißvorrichtung gemäß einer weiteren Ausführungsform,
Figur 5 ein Prinzipschaltbild einer Schweißvorrichtung gemäß einer weiteren Ausführungsform mit einer parallelen Einkopplung des Hochfrequenzsignals,
Figur 6 ein Prinzipschaltbild einer Schweißvorrichtung gemäß einer weiteren Ausführungsform mit einer direkt gespeisten Topologie,
Figur 7 ein Ablaufdiagramm eines Verfahrens zur Erzeugung eines Zündimpulses wie es einer Ausführungsform zugrunde liegen kann; und
Figur 8 schematisch den zeitlichen Verlauf eines typischen Zündimpulses gemäß dem Stand der Technik.

Nachfolgend werden bevorzugte Ausführungsformen der Erfindung anhand der Figuren näher erläutert. Die dargestellten Beispiele dienen der Veranschaulichung und sind nicht als einschränkend zu verstehen. Insbesondere können einzelne Merkmale der beschriebenen Ausführungsformen miteinander kombiniert oder durch funktional äquivalente Merkmale ersetzt werden, sofern dies technisch sinnvoll ist. Gleiche Bezugszeichen bezeichnen gleiche oder gleichartige Komponenten.

### Beschreibung von Ausführungsformen

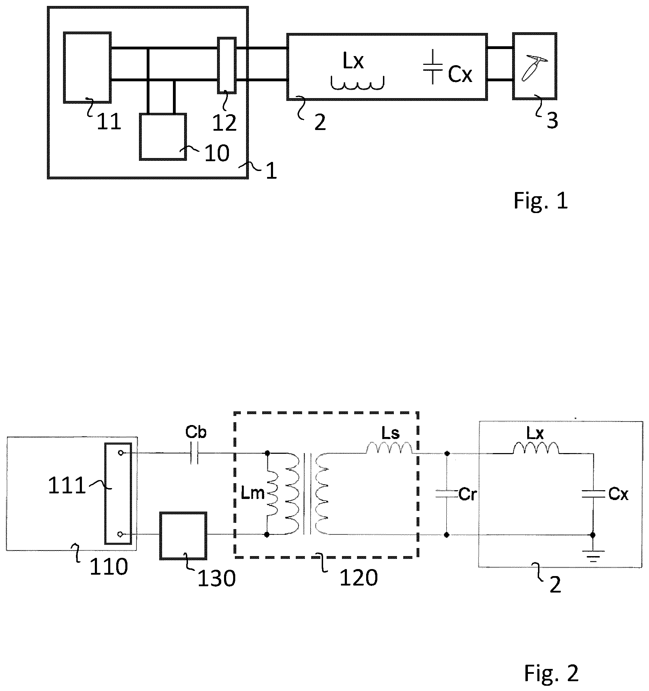

Figur 1 zeigt ein schematisches Übersichtsschaubild einer Schweißvorrichtung gemäß einer Ausführungsform der Erfindung. Die Schweißvorrichtung umfasst ein Schweißgerät 1, an das über den Ausgangsanschluss 12 ein Schlauchpaket 2 angeschlossen werden kann. Am gegenüberliegenden Ende des Schlauchpakets 2 ist ein Schweißbrenner 3 angeordnet.

Das Schweißgerät 1 kann ein Lichtbogenschweißgerät oder ein Plasmaschweißgerät sein, beispielsweise ein WIG-Schweißgerät oder ein MIG/MAG-Schweißgerät. Die Erfindung ist nicht auf eine bestimmte Art von Schweißgerät beschränkt, sondern kann grundsätzlich in verschiedenen Schweißverfahren eingesetzt werden, bei denen ein Hochfrequenz-Zündimpuls zur Lichtbogenzündung eingesetzt werden kann.

Das Schweißgerät 1 umfasst eine Schweißstromquelle 11, deren grundsätzlicher Aufbau als bekannt angesehen werden kann und daher nicht näher erläutert wird. Die Schweißstromquelle 11 stellt den Schweißstrom zwischen einem positiven und einem negativen Anschluss am Ausgangsanschluss 12bereit, wobei der Ausgangsanschluss 12 beispielsweise als Schweißbuchsen ausgebildet sein kann oder Schweißbuchsen umfassen kann.

Ferner ist im Schweißgerät 1 eine Vorrichtung 10 zum Erzeugen eines Zündimpulses (oder: Zündvorrichtung) vorgesehen. Der Zündimpuls dient dazu, zu Beginn eines Schweißvorgangs am Schweißbrenner 3 einen Lichtbogen zu zünden. Sobald sich der Lichtbogen stabilisiert hat, kann er durch die von der Schweißstromquelle 11 bereitgestellte elektrische Energie aufrechterhalten werden.

In der schematischen Darstellung der Figur 1 ist die Vorrichtung 10 parallel zur Schweißstromquelle 11 angeordnet. Diese Darstellung dient jedoch lediglich der Übersichtlichkeit und schränkt die Erfindung nicht ein.

In einer weiteren bevorzugten Ausführungsform ist die Vorrichtung 10 in Serie zu einer der beiden Verbindungen zwischen der Schweißstromquelle 11 und dem Ausgangsanschluss 12 vorgesehen. Darüber hinaus gelten die nachfolgenden Ausführungen für beide Varianten der Anordnung - seriell und parallel - soweit anwendbar.

Das Schlauchpaket 2 umfasst neben der Leitung für den Schweißstrom gegebenenfalls auch weitere Leitungen, beispielsweise Steuerleitungen und/oder eine Gaszufuhr für das Schutzgas. Das Schlauchpaket 2 weist parasitäre elektrische Eigenschaften auf, insbesondere eine parasitäre Kapazität Cx und eine parasitäre Induktivität Lx. Diese Eigenschaften hängen sowohl von der Länge des Schlauchpakets 2 als auch von dessen Lage im Raum ab und können sich während des Betriebs unter anderem durch eine Bewegung des Schlauchpakets 2 verändern.

Figur 2 zeigt ein schematisches Prinzipschaltbild einer Vorrichtung 10 zum Erzeugen eines Zündimpulses gemäß einer Ausführungsform der Erfindung. Die Vorrichtung 10 umfasst eine Ansteuereinrichtung 110, die über einen Hochfrequenzanschluss 111 ein Hochfrequenzsignal bereitstellt. Dieses Hochfrequenzsignal wird an die Primärseite eines Transformators 120 geleitet, der zur Erzeugung der für die Zündung erforderlichen Hochspannung dient.

Der Transformator 120 weist eine Magnetisierungsinduktivität Lm sowie eine Streuinduktivität Ls auf. Die Sekundärseite des Transformators 120 ist mit einem Schwingkreis gekoppelt, der die Streuinduktivität Ls des Transformators 120, einen ersten Kondensator Cr, die parasitäre Induktivität Lx des Schlauchpakets 2 sowie die parasitäre Kapazität Cx des Schlauchpakets 2 umfasst. In dieser Ausführungsform ist der erste Kondensator Cr zwischen den beiden Anschlusspunkten angeordnet. Dieser Schwingkreis bildet eine Resonanzstruktur, deren Frequenz von der Länge und Position des Schlauchpakets 2 abhängt. Grundsätzlich ist der erste Kondensator Cr optional und kann entfallen, sofern die parasitären Kapazitäten des Schlauchpakets 2 alleine die Resonanzbedingungen erfüllen. Die Verwendung des ersten Kondensators Cr ist jedoch vorteilhaft, da sie eine gezielte Beeinflussung der Resonanzeigenschaften ermöglicht und insbesondere die erreichbare Resonanzfrequenz abgestimmt werden kann.

Um eine effiziente Anregung dieses Schwingkreises zu gewährleisten, ist die Ansteuereinrichtung 110 dazu ausgelegt, das Hochfrequenzsignal an die aktuelle Resonanzfrequenz des Systems anzupassen. Hierzu ist eine Messeinrichtung 130 vorgesehen, die hier auf der Primarseite des Transformators 120 zwischen dem Hochfrequenzanschluss 111 und dem Transformator 120 angeordnet ist. Die Messeinrichtung 130 erfasst den Signalverlauf eines elektrischen Parameters, beispielsweise des Stroms oder der Spannung, und stellt ein Sensorsignal bereit. Basierend auf diesem Sensorsignal kann die Ansteuereinrichtung 110 die Frequenz des Hochfrequenzsignals dynamisch anpassen, um eine optimale Energieübertragung auf den Schwingkreis sicherzustellen.

Alternativ oder ergänzend zur messtechnischen Erfassung eines Sensorsignals kann die Frequenz des Hochfrequenzsignals auch auf Grundlage zuvor ermittelter Eigenschaften des Schwingkreises eingestellt werden. Eine solche Vorgehensweise kann insbesondere dann vorteilhaft sein, wenn die Charakteristik des verwendeten Schlauchpakets bereits bekannt ist oder im Vorfeld bestimmt wurde, beispielsweise im Rahmen einer Laborvermessung.

Hierzu kann die Resonanzfrequenz des Schwingkreises mit einem bestimmten Schlauchpaket vollständig erfasst und für spätere Anwendungen hinterlegt werden. Alternativ ist es auch möglich, lediglich einzelne charakteristische Parameter des Schlauchpakets, wie etwa die parasitäre Kapazität oder Induktivität, zu bestimmen und in einem geeigneten Zusammenhang für das jeweilige Schlauchpaket zu speichern. Aus diesen zuvor ermittelten Parametern kann die erwartete Resonanzfrequenz des Schwingkreises rechnerisch abgeleitet werden.

Die jeweils relevanten Parameter für ein angeschlossenes Schlauchpaket können dabei in einer Speichereinrichtung hinterlegt sein, welche einen Datensatz mit unterschiedlichen Schlauchpaketen und deren charakteristischen Eigenschaften umfasst. Die Ansteuereinrichtung kann dann auf Grundlage dieser Daten die Anregungsfrequenz des Hochfrequenzsignals einstellen.

Dabei besteht die Möglichkeit, dass das angeschlossene Schlauchpaket automatisch identifiziert wird - beispielsweise über eine elektronische Markierung oder durch eine kodierte Steckverbindung - sodass die zugehörigen Daten automatisch aus dem Speicher ausgelesen und verwendet werden können.

Alternativ kann auch der Benutzer über eine Benutzerschnittstelle manuell angeben, welches Schlauchpaket angeschlossen ist, beispielsweise durch Auswahl aus einer Liste oder durch Eingabe spezifischer Merkmale wie Typ, Länge oder Herstellerangaben. Auch in diesem Fall kann anschließend automatisiert auf die gespeicherten Parameter zugegriffen und die Frequenz des Hochfrequenzsignals entsprechend eingestellt werden.

Die Verwendung zuvor ermittelter Daten ermöglicht eine besonders effiziente Anregung des Schwingkreises auch ohne aufwendige messtechnische Rückkopplung im laufenden Betrieb. Sie kann insbesondere in Systemen von Vorteil sein, bei denen die angeschlossenen Schlauchpakete in Anzahl und Typisierung überschaubar sind oder häufig in bekannter Konfiguration eingesetzt werden.

Zur Sperrung von Gleichspannungsanteilen ist ein zweiter Kondensator Cb als Block-Kondensator vorgesehen, der zwischen dem Hochfrequenzanschluss 111 und der Primärseite des Transformators 120 angeordnet ist.

Die Ansteuereinrichtung 110 ist dazu ausgelegt, ein Hochfrequenzsignal mit einer gewünschten Frequenz bereitzustellen. Hierzu kann sie beispielsweise eine oder mehrere Halbbrücken umfassen, die aus einer eingangsseitigen Gleichspannung eine rechteckförmige Wechselspannung erzeugen. Die Eingangsspannung der Ansteuereinrichtung 110 kann moduliert werden, sodass zu Beginn der Anregung eine ansteigende Spannung bereitgestellt wird. Dies ermöglicht es, die Amplitude des Hochfrequenzsignals gezielt anzupassen, beispielsweise über einen Rampenverlauf oder eine andere Modulationsform.

Das Hochfrequenzsignal weist bevorzugt eine Frequenz von mindestens 10 kHz auf. Insbesondere kann die Frequenz in einem Bereich zwischen 300 kHz und 3 MHz liegen. Die Wahl der Frequenz hängt von den Resonanzeigenschaften des Schwingkreises ab, der durch das Schlauchpaket 2, den Transformator 120 und den ersten Kondensator Cr bestimmt wird.

Typischerweise liegt die Resonanzfrequenz in einem Bereich von 300 kHz bis 1,3 MHz, abhängig von den konkreten Bauelementen und der elektrischen Konfiguration der Vorrichtung 10. Unter Verwendung moderner Halbleitertechnologien, wie beispielsweise SiC-MOSFETs oder GaN-FETs, können jedoch auch höhere Frequenzen bis in den Bereich mehrerer Megahertz realisiert werden. Dies ermöglicht unter bestimmten Voraussetzungen eine kompaktere Bauweise der Schaltungskomponenten, da mit steigender Frequenz kleinere Induktivitäten und Kapazitäten für die gewünschte Resonanzanregung benötigt werden.

Durch die Anregung und die Rückkopplung aus der Messeinrichtung 130 erfolgt eine Erregung des Schwingkreises auf der Sekundärseite des Transformators 120. Der Schwingkreis umfasst die Streuinduktivität Ls des Transformators 120, den ersten Kondensator Cr, die parasitäre Induktivität Lx des Schlauchpakets 2 sowie die parasitäre Kapazität Cx des Schlauchpakets 2.

Die Ansteuereinrichtung 110 kann die Resonanzfrequenz dieses Schwingkreises erkennen und die Anregungsfrequenz entsprechend anpassen. In vielen Fällen erfolgt die Anregung mit einer Frequenz leicht oberhalb der Resonanzfrequenz, um die Schaltverluste der Halbleiterschalter zu berücksichtigen, wobei die Frequenz bis zum Vierfachen der Resonanzfrequenz betragen kann oder auf ganzzahlige Vielfache der Resonanzfrequenz eingestellt wird. Ebenso ist es möglich, die Anregungsfrequenz auf einen Bruchteil der Resonanzfrequenz einzustellen, beispielsweise bis hin zu einem Viertel der Resonanzfrequenz.

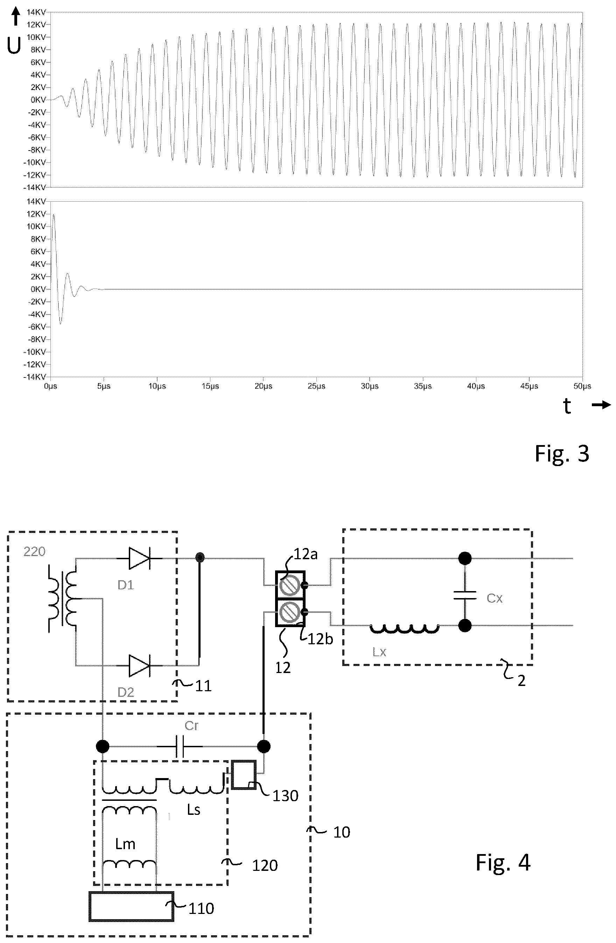

Figur 3 zeigt exemplarisch eine Gegenüberstellung zweier Zündimpulse zur Veranschaulichung der Signalformen konventioneller und erfindungsgemäßer Systeme. In beiden Diagrammen ist jeweils ein Spannungsverlauf über eine identische Zeitspanne von 50 Mikrosekunden dargestellt.

Das obere Diagramm zeigt einen Zündimpuls, wie er gemäß einer Ausführungsform der vorliegenden Erfindung bereitgestellt werden kann. In dem dargestellten Beispiel steigt die Ausgangsspannung zunächst innerhalb eines Anstiegsbereichs zwischen etwa 20 und 25 Mikrosekunden auf eine maximale Amplitude von ±12 kV an. Im Anschluss bleibt die Spannung annähernd konstant auf diesem Niveau, wobei sowohl die positive als auch die negative Halbwelle gleich ausgeprägt sind. Diese symmetrische und weitgehend dämpfungsfreie Signalform ermöglicht eine gleichmäßige Zündung unabhängig von der vorliegenden Polarität und stellt die Hochspannung über einen längeren Zeitraum zur Verfügung.

Zum Vergleich ist im unteren Diagramm ein typischer Zündimpuls dargestellt, wie er mit einem konventionellen Überlagerungszündsystem erzeugt wird. Der Spannungsverlauf entspricht dem bereits mit Bezug auf Figur 8 beschriebenen Impulsprofil: Nach einer initialen positiven Spannungsspitze von etwa 12 kV folgen eine abgeschwächte negative Halbwelle von rund -6 kV sowie eine deutlich geringere zweite positive Halbwelle mit nur noch etwa 2 kV. Der Impuls klingt innerhalb weniger Mikrosekunden stark ab, sodass die maximale Zündspannung nur in einer Polaritätsrichtung und nur für einen sehr kurzen Zeitraum anliegt.

Die Gegenüberstellung veranschaulicht den Unterschied zwischen dem gedämpften, asymmetrischen Verhalten konventioneller Zündimpulse und dem gleichmäßigen, weitgehend konstanten Verlauf der erfindungsgemäßen Signalform.

Um die Sicherheit während des Betriebs zu gewährleisten, ist die Messeinrichtung 130 dazu ausgelegt, den hochfrequenten Anteil der Ausgangsspannung U zu überwachen. Eine unerwartete Veränderung der elektrischen Eigenschaften des Schwingkreises kann darauf hinweisen, dass ein ungewollter Kontakt mit einer Person vorliegt.

In einem solchen Fall sinkt der Lastwiderstand auf wenige kΩ (bspw. 0,5kΩ) auf der Sekundärseite des Transformators 120, was zu einer starken Dämpfung des hochfrequenten Signals führt. Wird eine solche Dämpfung detektiert und überschreitet sie einen vorbestimmten Schwellwert, beendet die Ansteuereinrichtung 110 sofort das Bereitstellen des Hochfrequenzsignals.

Diese schnelle Abschaltung minimiert nicht nur die abgegebene Energie, sondern kann auch verhindern, dass eine Person durch den Kontakt erschrickt. Dies ist insbesondere bei Montagearbeiten mit einem Schweißgerät von Bedeutung, da ein plötzliches Erschrecken zu unkontrollierten Bewegungen führen und potenziell gefährliche Situationen verursachen könnte. Zwar wird die im Resonanzkondensator Cr und in der parasitären Kapazität des Schlauchpakets Cx gespeicherte Energie nach der Abschaltung noch abgegeben, jedoch ist die insgesamt abgegebene Energiemenge deutlich reduziert. Dadurch werden die Belastung für eine betroffene Person verringert und der Personenschutz zusätzlich verbessert.

Das Hochfrequenzsignal für den Zündimpuls kann in unterschiedlichen Formen ausgegeben werden. In einer ersten Variante wird das Signal als kontinuierliches hochfrequentes Signal bereitgestellt, wobei die Ansteuereinrichtung 110 die Frequenz in Abhängigkeit von der Resonanzfrequenz des Schwingkreises anpasst.

Alternativ kann das Hochfrequenzsignal in Form von Pulsen ausgegeben werden. Dabei können die Pulsdauer, die Pulsamplitude sowie der zeitliche Abstand zwischen den Pulsen variiert werden. Diese Pulsausgabe bietet mehrere Vorteile, insbesondere im Hinblick auf die Einhaltung sicherheitsrelevanter Vorschriften.

Durch die gezielte Gestaltung der Pulsfolge kann innerhalb eines einzelnen Pulses eine hohe Energiemenge abgegeben werden, während die über die Zeit gemittelte Energie reduziert bleibt. Dies ermöglicht es, einen effektiven Zündvorgang mit hoher Leistung durchzuführen, ohne dabei Grenzwerte für die zulässige Energieabgabe zu überschreiten. Besonders im Hinblick auf den Personenschutz ist dies von Vorteil.

Figur 4 zeigt eine schematische Darstellung einer Schweißvorrichtung mit einer Vorrichtung 10 zur Erzeugung eines Zündimpulses gemäß einer weiteren Ausführungsform.

Im Unterschied zur zuvor beschriebenen Ausführungsform ist die Messeinrichtung 130 in dieser Variante auf der Sekundärseite des Transformators 120 vorgesehen. Sie ist zwischen dem Transformator 120 und einem Anschlusspunkt 12b des Ausgangsanschlusses 12 angeordnet.

Darüber hinaus zeigt Figur 4 die Anbindung der Vorrichtung 10 gemeinsam mit der Schweißstromquelle 11, wobei beide an den Ausgangsanschluss 12 speisen. Der Schweißstrom von der Schweißstromquelle 11 wird über einen Transformator 220 bereitgestellt und mittels der Dioden D1 und D2 gleichgerichtet.

In dieser Ausführungsform ist der erste Kondensator Cr parallel zur Sekundärseite des Transformators 120 der Vorrichtung 10 angeordnet. Ein Anschlusspunkt des ersten Kondensators Cr ist mit dem Anschlusspunkt 12b des Ausgangsanschlusses 12 verbunden, während der andere Anschlusspunkt 12a mit einem Anschlusspunkt der Sekundärseite des Transformators 220 der Schweißstromquelle 11 gekoppelt ist.

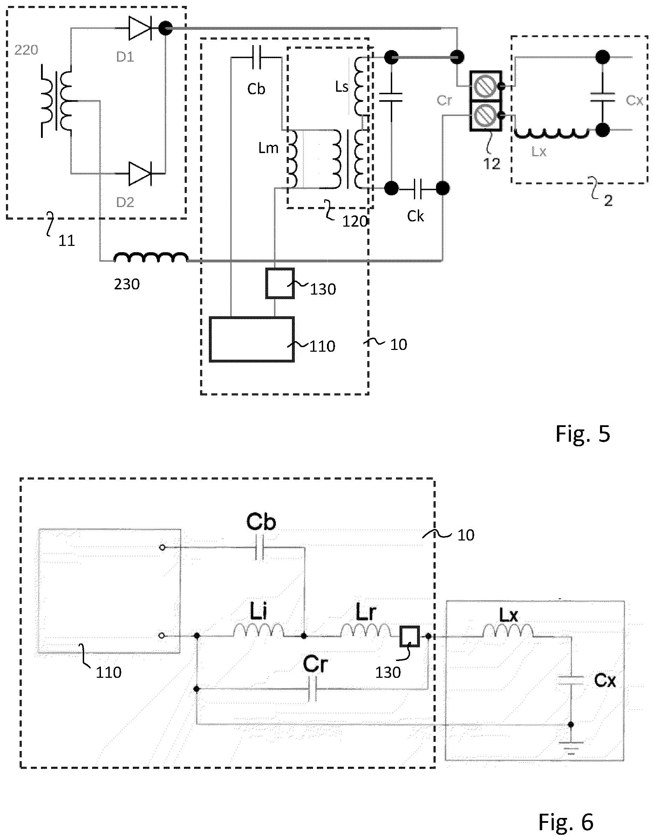

Figur 5 zeigt eine alternative Ausführungsform der Schweißvorrichtung, bei der die Einkopplung des Hochfrequenzsignals nicht seriell zur Ausgabe des Schweißstroms, sondern parallel dazu erfolgt.

In dieser Konfiguration stellt die Schweißstromquelle 11 den Schweißstrom am Ausgangsanschluss 12 bereit. Parallel dazu wird über den Transformator 120 und den ersten Kondensator Cr auf der Sekundärseite des Transformators 120 das Hochfrequenzsignal eingekoppelt. Diese Anordnung unterscheidet sich somit von den zuvor beschriebenen Varianten, bei denen das Hochfrequenzsignal in Reihe zur Schweißstromquelle 11 eingespeist wurde.

Zusätzlich ist zwischen dem Mittenanschluss der Sekundärseite des Transformators 220 der Schweißstromquelle 11 und dem korrespondierenden Anschlusspunkt des Ausgangsanschlusses 12 eine Blockerspule 230 vorgesehen. An dieser Blockerspule 230 fällt die Zündspannung ab. Ansonsten könnte die Schweißstromquelle die Zündspannung kurzschließen und es könnte sich keine Hochspannung aufbauen.

In dieser Ausführungsform ist die Messeinrichtung 130 auf der Primärseite des Transformators 120 vorgesehen. Grundsätzlich wäre jedoch auch eine Anordnung auf der Sekundärseite möglich.

Ferner ist in dieser Ausführungsform ein Koppelkondensator Ck vorgesehen, der zwischen einem Anschluss des ersten Kondensators Cr beziehungsweise einem Anschluss der Sekundärseite des Transformators 120 und einem korrespondierenden Anschlusspunkt des Ausgangsanschlusses 12 angeordnet sein kann. Der Koppelkondensator Ck blockiert niederfrequente Anteile und Gleichspannungsanteile der Schweißstromquelle 11, während er das hochfrequente Zündsignal passieren lässt. Dadurch wird verhindert, dass der Zündtransformator 120 niederfrequente Spannungen oder Gleichspannungen der Schweißstromquelle kurzschließt und so das Schweißpotential beeinträchtigt wird.

Figur 6 zeigt eine alternative Ausführungsform der Schweißvorrichtung, bei der das Hochfrequenzsignal direkt an den Ausgangsanschluss 12 gekoppelt wird, ohne einen galvanisch trennenden Transformator 120.

In dieser Variante können die Induktivitäten Li und Lr beispielsweise als Luftspulen ausgeführt sein. Das von der Ansteuereinrichtung 110 erzeugte Rechtecksignal wird über den Block-Kondensator Cb parallel zur Luftspule Li angelegt. Die Luftspule Li ist erforderlich, um den Schweißstrom durch die Topologie zu leiten.

Der Serienschwingkreis setzt sich aus der Luftspule Lr, dem ersten Kondensator Cr sowie den parasitären Anteilen des Schlauchpakets 2, insbesondere der Induktivität Lx und der Kapazität Cx, zusammen. Die Induktivität Li sollte so dimensioniert werden, dass sie wenige Mikrohenry (µH) beträgt (beispielsweise zwischen 0,5 und 9 Mikrohenry), da andernfalls der Blindwiderstand zu gering wird und der Stromfluss aus der Ansteuereinrichtung 110 unkontrolliert ansteigen könnte.

Durch eine geeignete Wahl der Resonanz- und Schaltfrequenz lassen sich die Luftspulen effizient realisieren, wobei ihre Auswirkungen auf den Schweißprozess minimal bleiben.

Zusätzlich kann die parallele Einspeisung an die Induktivität Li auch über einen kleinen Ferrittransformator erfolgen, wodurch die Brückenspannung frei gewählt werden kann. Dabei muss jedoch berücksichtigt werden, dass in diesem Fall die Induktivität Li Teil des Serienschwingkreises wird und entsprechend hohe Spannungen parallel zu Li auftreten können.

Das nachfolgend beschriebene Verfahren kann beliebige Schritte umfassen, die zur Realisierung des vollen Zusammenhangs mit den in den Vorrichtungen beschriebenen Ausführungsformen geeignet sind. Die zuvor beschriebenen Vorrichtungen können zudem beliebig abgewandelt und ergänzt werden, um die verschiedenen Ausführungsformen miteinander, soweit sinnvoll, zu kombinieren oder die nachfolgenden Verfahrensschritte zu implementieren.

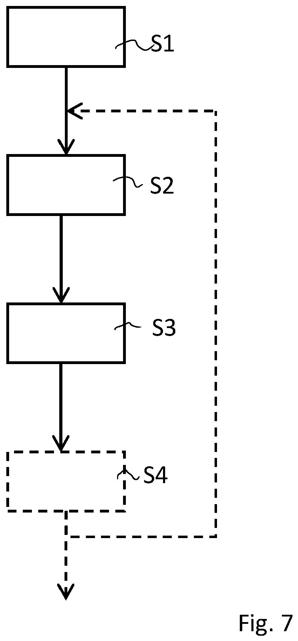

Figur 7 zeigt ein Ablaufdiagramm eines Verfahrens zur Erzeugung eines Zündimpulses für ein Schweißgerät 1. In einem ersten Schritt S1 wird eine Vorrichtung 10 bereitgestellt, die gemäß einer der vorherigen Ausführungsformen aufgebaut ist. Diese Vorrichtung umfasst eine Ansteuereinrichtung 110, eine Messeinrichtung 130 sowie ein induktives Bauelement, beispielsweise einen Transformator 120 oder eine Spulenanordnung.

Nachdem die Vorrichtung 10 bereitgestellt wurde, erfolgt in einem nächsten Schritt S2 ein Ermitteln einer Resonanzfrequenz des Schwingkreises mit dem an dem Ausgangsanschluss 12 eingeschlossenen Schlauchpaket 2. Wie im voraufgegangenen in Zusammenhang mit der Vorrichtung 10 bereits ausgeführt, kann dieses ermittelnde Resonanzfrequenz vorteilhaft unter Verwendung von Sensorsignalen von einer Messeinrichtung 130 erfolgen. Zusätzlich oder alternativ kann die Ermittlung der Resonanzfrequenz auch unter Verwendung von zuvor abgespeicherten Daten, beispielsweise einer vorab für ein angeschlossenes Schlauchpaket 2 ermittelten Resonanzfrequenz oder spezifischen Parametern für ein solches Schlauchpaket 2 erfolgen.

In Schritt S3 kann daraufhin ein Hochfrequenzsignal durch die Ansteuereinrichtung 110 erzeugt werden, das über den Hochfrequenzanschluss 111 ausgegeben wird. Dieses Signal regt einen Schwingkreis an, der aus der Streuinduktivität Ls des Transformators 120, dem ersten Kondensator Cr sowie den parasitären Eigenschaften des Schlauchpakets 2 besteht, insbesondere der parasitären Induktivität Lx und der parasitären Kapazität Cx.

Während des Betriebs kann optional die Messeinrichtung 130 in einem weiteren Schritt S4 ein Sensorsignal erfasst werden, das den Signalverlauf eines elektrischen Parameters, beispielsweise des Stroms oder der Spannung, beschreibt. Dieses Sensorsignal gibt Aufschluss über die aktuellen Resonanzeigenschaften des Schwingkreises, die sich durch Veränderungen in der Länge oder Lage des Schlauchpakets 2 ändern können.

In diesem Fall ist es möglich eine Anpassung der Frequenz des Hochfrequenzsignals durch die Ansteuereinrichtung 110 auf Basis des von der Messeinrichtung 130 erfassten Sensorsignals vorzunehmen. Diese Anpassung erfolgt in Echtzeit, um eine optimale Energieübertragung sicherzustellen. Das Hochfrequenzsignal wird dabei mit einer für die Zündung geeigneten Frequenz bereitgestellt, die je nach Ausführungsform leicht oberhalb der Resonanzfrequenz liegen kann, wobei auch andere Regelstrategien möglich sind.

Ferner ist es optional möglich, nach dem Erzeugen eines Zündimpulses zurück zu Schritt S2 zu springen und einen weiteren Zündimpulses zu generieren, bis eine erfolgreiche Zündung erfolgt ist.

Zusammenfassend schafft die vorliegende Erfindung eine Vorrichtung und ein Verfahren zum Erzeugen eines Zündimpulses für ein Schweißgerät. Die Vorrichtung umfasst einen Ausgangsanschluss zur Verbindung mit einem Schlauchpaket des Schweißgeräts, eine Ansteuereinrichtung zur Bereitstellung eines Hochfrequenzsignals an einem Hochfrequenzanschluss, ein induktives Bauelement, das zwischen dem Hochfrequenzanschluss und dem Ausgangsanschluss angeordnet ist, sowie einen ersten Kondensator, der mit mindestens einem Anschlusspunkt des induktiven Bauelements elektrisch gekoppelt ist. Die Ansteuereinrichtung ist dazu ausgelegt, die Frequenz des Hochfrequenzsignals einzustellen, wodurch eine Anpassung an die jeweiligen Resonanzeigenschaften eines Schwingkreises mit dem Schlauchpaket des Schweißgeräts erfolgt. Dadurch wird eine verbesserte, stabile und effiziente Zündung von Lichtbogen und Plasmaschweißgeräten ermöglicht.

## Patentansprüche

1. Vorrichtung (10) zum Erzeugen eines Zündimpulses für ein Schweißgerät, umfassend:
einen Ausgangsanschluss (12) mit einem ersten Anschlusspunkt und einem zweiten Anschlusspunkt, wobei der Ausgangsanschluss (12) dazu ausgebildet ist, an dem ersten Anschlusspunkt und dem zweiten Anschlusspunkt mit einem Schlauchpaket (2) des Schweißgeräts verbunden zu werden;
eine Ansteuereinrichtung (110), die dazu ausgebildet ist, an einem Hochfrequenzanschluss (111) der
Ansteuereinrichtung (110) ein Hochfrequenzsignal bereitzustellen;
ein induktives Bauelement (120; Li, Lr), das zwischen dem Hochfrequenzanschluss (111) der Ansteuereinrichtung (110) und dem Ausgangsanschluss (12) angeordnet ist;
wobei die Ansteuereinrichtung (110) dazu ausgelegt ist, eine Resonanzfrequenz eines Schwingkreises mit einem an dem Ausgangsanschluss (12) angeschlossenen Schlauchpaket (2) zu ermitteln und eine Frequenz des von der
Ansteuereinrichtung (110) bereitgestellten Hochfrequenzsignals unter Verwendung der ermittelten Resonanzfrequenz einzustellen.

2. Vorrichtung nach Anspruch 1, mit einem ersten Kondensator (Cr), der mit mindestens einem Anschlusspunkt des induktiven Bauelements (120; Li, Lr) elektrisch gekoppelt ist.

3. Vorrichtung (10) nach Anspruch 1 oder 2,
mit einer Messeinrichtung (130), welche zwischen dem Hochfrequenzanschluss (111) und dem Ausgangsanschluss (12) angeordnet ist und welche dazu ausgebildet ist, einen Signalverlauf zumindest eines elektrischen Parameters zu erfassen und ein zu dem erfassten Signalverlauf korrespondierendes Sensorsignal bereitzustellen;
wobei die Ansteuereinrichtung (110) dazu ausgelegt ist, die Resonanzfrequenz des Schwingkreises mit dem an dem Ausgangsanschluss (12) angeschlossenen Schlauchpaket (2) unter Verwendung des von der Messeinrichtung (130) bereitgestellten Sensorsignals zu ermitteln.

4. Vorrichtung (10) einem der Ansprüche 1 bis 3,
wobei die Ansteuereinrichtung (110) dazu ausgelegt ist, die Resonanzfrequenz des Schwingkreises mit einem dem an dem Ausgangsanschluss (12) angeschlossenen Schlauchpaket (2) unter Verwendung eines zuvor ermittelten charakteristischen Parameters für das angeschlossene Schlauchpaket (2) zu ermitteln.

5. Vorrichtung (10) nach Anspruch 4,
mit einer Speichereinrichtung, die dazu ausgelegt ist, einen Zusammenhang zwischen an den Ausgangsanschluss (12) anschließbaren Schlauchpaketen (2) und mindestens einem zuvor ermittelten charakteristischen Parameter für das jeweilige Schlauchpaket (2) zu speichern und bereitzustellen.

6. Vorrichtung (10) nach einem der Ansprüche 1 bis 5,
mit einem zweiten Kondensator (Cb), der zwischen einem Anschlusspunkt des Hochfrequenzanschlusses (111) und dem induktiven Bauelement (120; Li, Lr) angeordnet ist.

7. Vorrichtung (10) nach einem der Ansprüche 1 bis 6, wobei das induktive Bauelement einen Transformator (120) umfasst, und
wobei eine Primärseite des Transformators (120) mit dem Hochfrequenzanschluss (111) der Ansteuereinrichtung (110) elektrisch gekoppelt ist und eine Sekundärseite des Transformators (120) mit dem Ausgangsanschluss (12) elektrisch gekoppelt ist.

8. Vorrichtung (10) nach einem der Ansprüche 1 bis 6,
wobei das induktive Bauelement eine erste Spule (Lr) umfasst, die an einem ersten Anschlusspunkt mit einem ersten Anschlusspunkt des Hochfrequenzanschlusses (111) der Ansteuereinrichtung (110) elektrisch gekoppelt ist und an einem zweiten Anschlusspunkt mit einem zweiten Anschlusspunkt des Ausgangsanschlusses (12) elektrisch gekoppelt ist.

9. Vorrichtung (10) nach Anspruch 8,
mit einer zweiten Spule (Li), die mit einem ersten Anschlusspunkt mit dem ersten Anschlusspunkt der ersten Spule (Lr) elektrisch verbunden ist und an einem zweiten Anschlusspunkt mit einem zweiten Anschlusspunkt des Hochfrequenzanschlusses (111) und mit einem ersten Anschlusspunkt (12b) des Ausgangsanschlusses (12) elektrisch gekoppelt ist.

10. Vorrichtung (10) nach einem der Ansprüche 1 bis 8,
wobei die Ansteuereinrichtung (110) dazu ausgelegt ist, das Hochfrequenzsignal in Form von Pulsen mit einer vorbestimmten Pulsdauer und/oder Pulsamplitude bereitzustellen.

11. Vorrichtung (10) nach Anspruch 10,
wobei die Ansteuereinrichtung (110) dazu ausgelegt ist, eine Folge von Pulsen mit vorbestimmten zeitlichen Abständen bereitzustellen.

12. Vorrichtung (10) nach Anspruch 10 oder 11,
wobei die Ansteuereinrichtung (110) dazu ausgelegt ist, eine während eines Pulses abgegebene Zündenergie zu ermitteln und die Pulsdauer und/oder die Pulsamplitude und/oder den zeitlichen Abstand zwischen den Pulsen unter Verwendung der ermittelten Zündenergie einzustellen.

13. Vorrichtung (10) nach einem der Ansprüche 1 bis 12,
wobei ein hochfrequenter Anteil einer an dem Ausgangsanschluss (12) bereitgestellten Ausgangsspannung eine zumindest annähernd kontinuierliche sinusförmige Signalform oder einen Puls mit einer zumindest annähernd kontinuierlichen sinusförmigen Signalform aufweist.

14. Vorrichtung (10) nach einem der Ansprüche 1 bis 13,
wobei die Ansteuereinrichtung (110) dazu ausgelegt ist, einen Verlauf des hochfrequenten Anteils der am Ausgangsanschluss (12) bereitgestellten Ausgangsspannung zu überwachen, und das Bereitstellen des Hochfrequenzsignals zu beenden, falls eine Dämpfung des hochfrequenten Anteils der am Ausgangsanschluss (12) bereitgestellten Ausgangsspannung einen vorbestimmten Schwellwert überschreitet.

15. Vorrichtung (10) nach einem der Ansprüche 1 bis 14,
wobei das Hochfrequenzsignal eine Frequenz von mindestens 10 Kilohertz aufweist, bevorzugt eine Frequenz in einem Bereich zwischen 300 Kilohertz und 3 Megahertz.

16. Vorrichtung (10) nach einem der Ansprüche 1 bis 15,
wobei die Ansteuereinrichtung (110) eine Energieversorgungsschaltung umfasst, die dazu ausgelegt ist, eine modulierbare Speisespannung für das Bereitstellen des Hochfrequenzsignals einzustellen.

17. Schweißvorrichtung, mit:
einer Schweißstromquelle (11); und
einer Vorrichtung (10)zum Erzeugen eines Zündimpulses nach einem der Ansprüche 1 bis 14.

18. Schweißvorrichtung nach Anspruch 17,
wobei die Schweißvorrichtung eine Plasma-Schweißvorrichtung oder eine Lichtbogenschweißvorrichtung, in insbesondere ein Wolfram-Inert-Gas, WIG-, Schweißgerät, ein MIG/Mag-Schweißgerät oder ein Elektrodenschweißgerät umfasst.

19. Verfahren zum Erzeugen eines Zündimpulses für ein Schweißgerät, mit den Schritten:
Bereitstellen (S1) einer Vorrichtung (10) zum Erzeugen eines Zündimpulses nach einem der Ansprüche 1 bis 13;
Ermitteln (S2) einer Resonanzfrequenz eines Schwingkreises mit einem an dem Ausgangsanschluss (12) angeschlossenen Schlauchpaket (2);
Anregen (S3) des Schwingkreises mit einem Hochfrequenzsignal, wobei das Hochfrequenzsignal unter Verwendung der ermittelten Resonanzfrequenz des Schwingkreises eingestellt wird.
